# EUROPEAN PATENT SPECIFICATION

(11) **EP 1 754 757 B1**
(45) Date of publication and mention of the grant of the patent: **17.04.2019**
(21) Application number: 06015573.6
(22) Date of filing: 26.07.2006
(51) Int. Cl.: C09D 7/80, C09D 17/00, C09B 67/22

(54) **A process for preparing a particulate dry tinter comprising at least two pigments, and use in a coating composition**
Verfahren zur Herstellung von Farbmittel in trockener Pulverform enthaltend mindestens zwei Pigmente, und Verwendung in Beschichtungszusammensetzungen
Procédé de préparation d'un agent colorant sec sous forme de particules comprenant au moins deux pigments et utilisation dans une composition de revêtement

(30) Priority: 17.08.2005 GB 0516860; 16.06.2006 GB 0611972
(43) Date of publication of application: 21.02.2007
(73) Proprietor: Akzo Nobel Coatings International B.V., 6824 BM Arnhem (NL)
(72) Inventor: Sasada, Paul John Christopher, Farnham Common Buckinghamshire SL2 3EL (GB); Williams, Heather Elizabeth, Slough Berkshire SL3 7QA (GB); Straub, Hugues, Slough Berkshire SL1 2DR (GB)
(74) Representative: Akzo Nobel IP Department

(56) References cited:
- WO-A-02/055610
- WO-A1-03/064541
- US-A- 4 601 759
- US-A- 5 344 487
- US-A1- 2005 070 640
- US-B1- 6 818 050

## Description

The present invention relates to a particulate dry tinter and a process for its production.

Coating compositions for example paints, lacquers, varnishes and wood stains for use in decorating buildings, their fixtures and fittings, are supplied as either ready mixed products, where colour is added at the point of manufacture, or as tinted products, where colour is added at the point of purchase.

In US5344487 composite pigments for use in paper coatings are disclosed, said pigments comprising one or more types of core pigments particles and one or more types of co-pigment particles.

Generally speaking the range of ready mixed colours that can be made available is limited because available in-store display space is limited. In-store tinting allows a very wide range of colours to be made available in-store as less display space is required. The availability of a wide range of colours is particularly important to professional painters and decorators and to increasing numbers of consumers who are more adventurous about interior decoration or who wish to personalise their homes.

In-store tinting comprises adding to a base paint, one or more pigment-containing tinters according to a recipe to produce a particular predetermined colour. Tinters generally comprise a dispersion of a single pigment in a liquid carrier. For emulsion paint the carrier will be aqueous. The base paint can be a standard white paint or a base paint particularly formulated for tinting.

Tinting is normally carried out in-store using a computer-controlled tinting machine. However, in some markets, professional painters and decorators and some consumers prefer to tint paint by hand on site prior to application. When tinting in this way, the tinters, normally liquid tinters, can be added to the base paint according to a predetermined recipe or by eye to produce the required colour.

Tinting by hand presents a number of difficulties. The first is ensuring consistency of colour between successive batches or tinted paint. The second is that spillage of tinter is particularly hazardous since their colours are relatively intense and therefore difficult to remove.

Tinting by hand can also be carried out using dry powder tinters. Known tinters generally comprise a single coloured pigment and are more difficult to mix than are liquid tinters. So the problem of batch to batch variation, which is inherent in this form of tinting, is made far worse where the desired end colour requires mixing two powder tinters. Further, powder tinters containing more than one coloured pigment have a non-uniform appearance and unlike bi- and multi-pigmented liquid tinters, their colour does.not resemble the colour that they will impart to the base paint to be tinted. US6818050 and EP0212361 describe pigment preparations which are produced by mixing together pigments in a slurry and them drying them. Mixing pigments in this way does not result in a pigment which resembles the colour of the resulting coating composition.

According to the present invention there is provided a process for preparing a particulate dry tinter for use in tinting a coating composition including at least two coloured pigments wherein the particulate dry tinter has a colour hue predictive of the colour of the tinted coating composition and the coating when applied, the process comprising:- providing each coloured pigment as a separate aqueous pre-dispersion comprising the coloured pigment, a dispersing agent and water;- mixing the at least two aqueous pre-dispersions together in the presence of a filler pigment to form a homogeneous tinter dispersion;- drying the tinter dispersion to form the particulate dry tinter;wherein the particulate dry tinter has a mean particle size in the range of 80 µm and 400 µm inclusive.

The tinters of this invention have a number of benefits. First, as they are dried powders, they can be measured out more accurately than can liquid tinters, thereby minimising batch to batch colour variations. Secondly, tinting to produce a mixed colour (ie, one requiring two pigments) can be done more accurately. Thirdly, because the powders are predictive of the colour of the tinted paint, the consumer can buy with confidence knowing what the eventual colour of the painted surface will be. Fourthly, they allow the professional painter and decorator to tint by eye with confidence. These tinters can also be used as the basis of a dry powder tinting scheme to be used in-store.

The tinters of this invention are particulate and have mean particle size in the range of 80 and 400µm inclusive. Examples of lower limits for mean particle size range are 85 and 90µm. Examples of upper limits for the particle size range are 275, 300, 325, 350 and 375µm.

Examples of pigments for use in the tinters of the present invention include:
Mono azo pigments, for example C.I. Pigment Red 112, C.I. Pigment Yellow 74, and
Phtalocyanine pigments, for example C.I. Pigment Blue 15:3, C.I. Pigment Blue 15:4 and C.I. Pigment Green 7;
Dioxazine pigments, for example C.I. Pigment Violet 23;
Quinacridone pigments, for example C.I. Pigment Red 122;
Diketo-pyrrolo-pyrrole pigments, for example C.I. Pigment Red 255;
Quinophtalone pigments, for example C.I. Pigment Yellow 138;
Black pigments, for example Carbon black C.I. Pigment Black 6 and Furnace carbon black C.I. Pigment Black 7 and
White pigment, for example C.I. Pigment White 5 Tinanium Dioxide.

Such pigments are commercially available, for example, from BASF, Clariant, Ciba, Degussa, Elementis and Rockwood.

The tinters of the present invention will contain a filler pigment. A filler pigment is a substance which has pigment-like properties but has little or no affect on hue although it will reduce the chroma (that is the intensity) of the hue. In colloquial terms, they lighten the shade of colour. For the tinters of the present invention they also improve their incorporation into the base paint and improve other properties for example rheology.

Examples of filler pigments are calcium carbonate, aluminium silicate and clays, particulary kaolin and china clay.

The amount of filler pigment employed in any particular composition depends primarily upon the colour required in the final tinter. That will be a matter of taste and the proportion of filler pigment to coloured pigment will be adjusted accordingly. The precise amounts for any particular tinter can be determined by routine experimentation.

In practice, the filler pigment can be present in the tinter in an amount of from 40wt% to 90wt% of the tinter. For example, it can be from 45, 50 or 55 to 80 or 85 wt% of the tinter.

The tinters of this invention will in practice comprise a dispersing agent. The dispersing agent can be a non-ionic or anionic surfactant or a mixture of the two. It can also comprise a small amount of an auxiliary surfactant.

Examples of non-ionic surfactants for use in the tinters of the present invention include alkyl glucosides, polyglucosides esters, cyclic ether esters, alcohol ethoxylates and fatty acid amide ethoxylates.

Examples of alkylglucosides are C₆-C₁₂ alkylglucosides, for example decyl polyglucoside. Examples of cyclic ethers are sorbitan esters, for example the Tween and Span range of surfactants. Examples of alcohol ethoxylates include C₈-C₁₆ alkyl ethoxylates and in particular dodecyl ethoxylate.

The fatty acid component of the fatty acid amide ethoxylates can be derived from hexanoic, octanoic, decanoic, dodecanoic, tetradecanoic (or myristic) hexadecanoic (or palmitic) or octadecanoic (or stearic) acid. The acid may also be a mixture of fatty acids as for example, coco fatty acid, which is a mixture of C₈-C₁₈ fatty acids derived from natural sources. The fatty acid component can also be mono- or di-unsaturated as for example in oleic or linoelic acids.

The ethoxylate component can contain from 1-12 and particularly 4 ethoxylate groups.

The molecular weight of such ethoxylated fatty amides can lie in the range from 200 to 1000 inclusive.

Example of mimima for the molecular weight range are 250, 275 and 300. Examples of maxima for the molecular weight range are 600, 700, 750, 800, 850 and 900. In particular the range is from 320 to 820 inclusive.

The dispersing agents referred to above are commercially available from Akzo Nobel.

The proportion of dispersant used in the tinter compositions of the present invention depends upon the dispersant or dispersant combination employed and the particular pigment, that is the coloured pigments and filler pigments. The precise amount in any particular case can be determined by routine experimentation. As a general rule the total dispersant will not exceed 20wt% of tinter and will generally not be less than 5wt%. Typically the upper limit can be 15wt% and the lower limit 10wt%.

Where the dispersant is a mixture, the larger component is the non-ionic dispersant which can be present in an amount from 1.0-15wt% inclusive. The anionic dispersant will be present in an amount from 0.1-5wt% but will not exceed the amount of non-ionic surfactant.

For example, where the non-ionic dispersant is an alkylglucoside, polyglucoside or fatty acid ethoxylate, it can be present in an amount up to 15wt% of the tinter. In practice, the non-ionic dispersant will often be a mixture. The alkylglucoside will be the major component being from 7wt% to 10wt% of the tinter. The balance of the tinter can be made up of either fatty acid amide or alcohol ethoxylate or a mixture. Usually the ethoxylate will not exceed 5wt% of the tinter.

Where the anionic surfactant is an ethoxylated phosphated alcohol it does not exceed 2.0wt%. Examples of minima in both cases are 0.1 and 0.2 wt%. Examples of maxima are 1.0, 1.1, 1.2, 1.5 and 2.0 wt%. Similarly, where an awaiting surfactant, for example soya bean lecithin, is present that too will not exceed 2wt%.

The tinter compositions of this invention may also comprise additives commonly used in liquid tinters, for example preservatives, defoamers and humectants.

Examples of preservatives include biocides, in particular Bronopol / (CIT/MIT). Examples of defoamers are polysiloxanes. The amount of optional components to be used in a particular formulation can be determined by routine experimentation. Preservatives and defoamers are generally present in small amounts from 0.5-2.0wt% inclusive. Humectants can be used up to 5wt%. These additives are commercially available.

The tinters of the present invention are made by a process which comprises mixing at least two colour pigments, a dispersant and a filler pigment in the presence of water to form an homogeneous tinter dispersion mixture and thereafter drying the tinter dispersion to form particles.

Separate single pigment pre-dispersions are made from each of the coloured pigments to be mixed and the dispersing agent and a liquid carrier. For emulsion paints the liquid carrier is water. These pre-dispersions are mixed together and with any filler pigments for filler pigment pre-dispersion and other optional components to form a tinter dispersion. Any optional components can be added as a pre-dispersion or as part of the filler pigment pre-dispersion. The tinter dispersion so obtained can be dried batchwise in an oven and thereafter, if necessary, milled to produce a powder. Preferably however, the tinter dispersion is spray dried. Spray drying produces a particulate tinter where the powder is of a generally uniform particular size and is more homogeneous than is produced by batch oven drying.

In use the powder tinters of the present invention are stirred into a base paint either according to a predetermined recipe or adjusted by eye to produce the desired shade of colour.

The following examples illustrate the invention.

### Example 1

### Preparation of a particulate dry tinter.

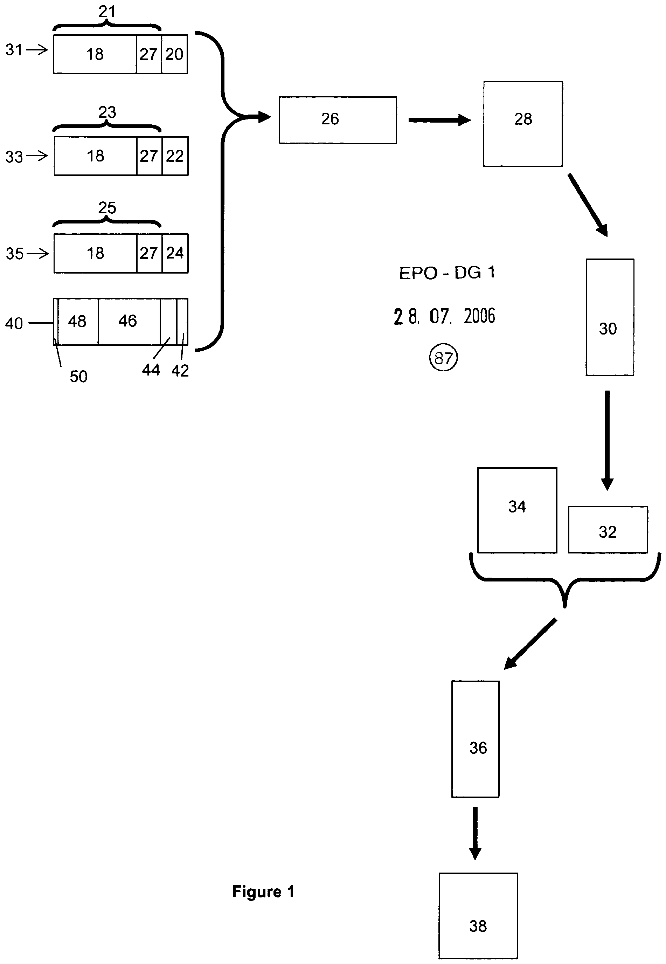

Figure 1 is the schematic representation of the process for producing a particulate dry tinter according to the present invention.

Referring to Figure 1, coloured pigments 20, 22 and 24 were each dispersed in a liquid carrier 21, 23 and 25 to produce predispersions 31, 33 and 35. The make-up of these dispersions is set out in Tables 1 to 3 respectively. The predispersions 31, 33 and 35 in the proportions set out in Table 5 were mixed together for 20 minutes in a high speed disperser with tinter extender 40 being a mixture of the components set out in Table 4. The mixture was then oven dried at a temperature between 60 and 100°C for 8 hours to produce a granular powder having a mean particle size in the range 100 to 250µm.

### Example 2

A second tinter was made according to the process of Example 1 substituting the extender tinter of Table 4 with the extender tinter of Table 6.

**Table 1**

| **Pre-dispersion 31 Components** | **Chemical Name** | **Wt% in dispersion** | **Wt% in tinter** |
|---|---|---|---|
| Liquid Carrier | Water | 34.7 | 0.00 |
| Humectant | Propylene Glycol | 2.5 | 3.92 |
| Humectant | Polyethylene Glycol | 4.2 | 6.59 |
| Dispersing Agent | Ethoxylated phosphated alcohol | 0.96 | 1.52 |
| Dispersing Agent | Fatty acid ethanolamide | 7.62 | 10.14 |
| Defoamer | Polysiloxane | 0.3 | 0.27 |
| Coloured Pigment | Copper phthalocyanine | 44.4 | 69.67 |
| Filler Pigment | Aluminium Silicate | 5.0 | 7.78 |
| Preserving Agent | Bronopol / (CIT/MIT) | 0.3 | 0.10 |

**Table 2**

| **Pre-dispersion 33 Components** | **Chemical Name** | **Wt% in dispersion** | **Wt% in tinter** |
|---|---|---|---|
| Liquid Carrier | Water | 44.17 | 0.00 |
| Humectant | Glycerol | 2.4 | 0.00 |
| Humectant | Polyethylene Glycol | 4.20 | 7.88 |
| Dispersing Agent | Soya Lecithin | 1.57 | 2.94 |
| Dispersing Agent | Fatty acid ethanolamide | 6.04 | 10.98 |
| Defoamer | Polysiloxane | 0.3 | 0.34 |
| Coloured Pigment | Carbon Black | 20.01 | 37.56 |
| Filler Pigment | Aluminium Silicate | 21.01 | 40.11 |
| Preserving Agent | Bronopol / (CIT/MIT) | 0.3 | 0.19 |

**Table 3**

| **Pre-dispersion 35 Components** | **Chemical Name** | **Wt% in dispersion** | **Wt% in tinter** |
|---|---|---|---|
| Liquid Carrier | Water | 59.08 | 0.00 |
| Humectant | Propylene Glycol | 2.6 | 6.47 |
| Humectant | Polyethylene Glycol | 4.28 | 10.64 |
| Dispersing Agent | Ethoxylated phosphated alcohol | 2.66 | 6.61 |
| Dispersing Agent | Soya Lecithin | 3.69 | 9.18 |
| Dispersing Agent | Fatty acid ethanolamide | 2.79 | 5.55 |
| Defoamer | Defoamer | 0.3 | 0.44 |
| Coloured Pigment | Quinacridone | 24.3 | 60.42 |
| Preserving Agent | Bronopol / (CIT/MIT) | 0.3 | 0.69 |

**Table 4**

| **Filler Pigment Pre-dispersion 40 Components** | **Chemical Name** | **Wt% in dispersion** | **Wt% in tinter** |
|---|---|---|---|
| Liquid Carrier | Water | 30.75 | 0.00 |
| Dispersing Agent | Ethoxylated phosphated alcohol | 7.0 | 9.11 |
| Dispersing Agent | Fatty acid ethanolamide | 4.6 | 4.91 |
| Preserving agent | Bronopol / (CIT/MIT) | 0.1 | 0.04 |
| Filler Pigment | Aluminium Silicate | 57 | 85.45 |
| Defoamer | Polysiloxane | 0.55 | 0.49 |

**Table 5**

| **Tinter Dispersion 28 Components** | **Wt% in dispersion** |
|---|---|
| Extender Tinter Pre-dispersion 40 | 85.00 |
| Pre-dispersion 31 | 6.77 |
| Pre-dispersion 33 | 1.50 |
| Pre-dispersion 35 | 6.73 |

**Table 6**

| **Filler Pigment Pre-dispersion Components** | **Chemical Name** | **Wt% in dispersion** | **Wt% in tinter** |
|---|---|---|---|
| Liquid Carrier | Water | 30.75 | 0.00 |
| Dispersing Agent | Fatty acid ethanolamide (non-ionic surfactant) | 11.6 | 14.02 |
| Preserving agent | Bronopol / (CIT/MIT) | 0.1 | 0.04 |
| Filler Pigment | Aluminium Silicate | 57 | 85.45 |
| Defoamer | Defoamer | 0.55 | 0.49 |

## Claims

1. A process for preparing a particulate dry tinter for use in tinting a coating composition including at least two coloured pigments wherein the particulate dry tinter has a colour hue predictive of the colour of the tinted coating composition and the coating when applied, the process comprising:
- providing each coloured pigment as a separate aqueous pre-dispersion comprising the coloured pigment, a dispersing agent and water;
- mixing the at least two aqueous pre-dispersions together in the presence of a filler pigment to form a homogeneous tinter dispersion;
- drying the tinter dispersion to form the particulate dry tinter;
wherein the particulate dry tinter has a mean particle size in the range of 80µm and 400µm inclusive.

2. A process according to claim 1 where the dispersing agent is non-ionic.

3. A process according to any one of claims 1 to 2 where the dispersing agent is anionic.

4. A particulate dry tinter obtainable by a process according to any one of claims 1 to 3.

5. A coloured emulsion paint including coloured with a tinter according to claim 4.

## Patentansprüche

1. Verfahren zur Herstellung eines Farbmittels in trockener Pulverform zur Verwendung beim Färben einer Beschichtungszusammensetzung, einschließlich mindestens zweier Farbpigmente, wobei das Farbmittel in trockener Pulverform einen Farbton hat, der die Farbe der gefärbten Beschichtungszusammensetzung und der Beschichtung nach dem Auftragen vorhersagt, wobei das Verfahren Folgendes umfasst:
- Bereitstellen jedes Farbpigments als separate, wässrige Vordispersion, umfassend das Farbpigment, ein Dispergiermittel und Wasser;
- Vermischen der wenigstens zwei wässrigen Vordispersionen in Gegenwart eines Füllerpigments, um eine homogene Farbmitteldispersion zu bilden;
- Trocknen der Farbmitteldispersion, um das Farbmittel in trockener Pulverform zu bilden,
wobei das Farbmittel in trockener Pulverform eine mittlere Partikelgröße in dem Bereich von 80 µm und 400 µm einschließlich hat.

2. Verfahren nach Anspruch 1, wobei das Dispergiermittel nichtionisch ist.

3. Verfahren nach einem der Ansprüche 1 bis 2, wobei das Dispergiermittel anionisch ist.

4. Farbmittel in trockener Pulverform, erhältlich durch ein Verfahren nach einem der Ansprüche 1 bis 3.

5. Gefärbte Emulsionsfarbe, einschließlich gefärbt mit einem Farbmittel nach Anspruch 4.

## Revendications

1. Procédé de préparation d'un colorant sec particulaire pour une utilisation dans la coloration d'une composition de revêtement comportant au moins deux pigments colorés, dans lequel le colorant sec particulaire a une teinte permettant de prévoir la couleur de la composition de revêtement colorée et du revêtement une fois appliqué, le procédé comprenant le fait :
- de fournir chaque pigment coloré sous forme d'une pré-dispersion aqueuse séparée comprenant le pigment coloré, un agent de dispersion et de l'eau ;
- de mélanger les au moins deux pré-dispersions aqueuses ensemble en présence d'un pigment de charge pour former une dispersion de colorant homogène ;
- de sécher la dispersion de colorant pour former le colorant sec particulaire ;
où le pigment sec particulaire a une taille moyenne de particules se trouvant dans la plage allant de 80 µm à 400 µm, inclus.

2. Procédé selon la revendication 1, dans lequel l'agent de dispersion est non ionique.

3. Procédé selon l'une quelconque des revendications 1 et 2, dans lequel l'agent de dispersion est anionique.

4. Colorant sec particulaire pouvant être obtenu par un procédé selon l'une quelconque des revendications 1 à 3.

5. Peinture-émulsion colorée, notamment colorée avec un colorant selon la revendication 4.
